Europäisches Patentamt

**European Patent Office**

**Office européen des brevets**

(19)

(11) Numéro de publication : **0 005 104 B1**

# (12) FASCICULE DE BREVET EUROPÉEN

(45) Date de publication du fascicule du brevet :
11.05.83

(21) Numéro de dépôt : **79400235.2**

(22) Date de dépôt : **11.04.79**

(51) Int. Cl.³ : **B 29 D 23/04, F 16 L 11/11**

(54) **Appareillage pour la fabrication en continu de profilés tubulaires ailetés en matière synthétique, et profilés tubulaires ailetés correspondants.**

(30) Priorité : **24.04.78 FR 7812033**

(43) Date de publication de la demande :
**31.10.79 Bulletin 79/22**

(45) Mention de la délivrance du brevet :
**11.05.83 Bulletin 83/19**

(84) Etats contractants désignés :
**CH DE GB LU NL SE**

(56) Documents cités :
**DE A 2 362 444**
**FR A 2 248 140**
**GB A 1 032 691**
**GB A 1 231 682**
**NI C 129 131**
**US A 2 586 822**
**US A 3 858 615**

(73) Titulaire : **ARMOSIG S.A.**
**Boîte Postale No 2 22 Avenue de la Jonchère**
**F-78170 La Celle St Cloud (FR)**

(72) Inventeur : **Chaplain, Jacques**
**14 Rue Ernest Renan**
**F-92310 Sevres (FR)**

(74) Mandataire : **Foldès, Georges et al**
**CABINET J. BONNET THIRION 95 Bd. Beaumarchais**
**F-75003 Paris (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

# 0 005 104

« Appareillage pour la fabrication en continu de profilés tubulaires ailetés en matière synthétique, et profilés tubulaires ailetés correspondants »

La présente invention concerne d'une manière générale la fabrication en matière synthétique extrudable, de profilés tubulaires, ou tubes, du type de ceux couramment mis en œuvre pour la circulation de fluides divers, et notamment d'eaux usées.

Dans leur réalisation la plus simple, les surfaces interne et externe de ces tubes sont l'une et l'autre lisses, et leur fabrication peut aisément se faire en continu par extrusion à l'aide d'une filière tubulaire, c'est-à-dire d'une filière formée d'une matrice externe et d'un poinçon interne ; il suffit ensuite d'assurer à l'une des extrémités de tronçons de tels tubes la tulipe propre à en permettre leur emboîtement successif.

En pratique, il est d'usage courant d'implanter directement les tubes de ce type dans le sol, et il en résulte qu'ils subissent de la part de ce dernier des efforts extérieurs transversaux qui tendent, dans un premier temps, à en ovaliser la section, et, dans un deuxième temps, si ces efforts deviennent suffisamment importants, à provoquer un flambage de cette section puis un effondrement local brutal de celle-ci.

Pour pallier cet inconvénient, il a déjà été proposé d'augmenter le moment d'inertie par unité de longueur de ces tubes en conférant longitudinalement à leur surface externe un profil aileté.

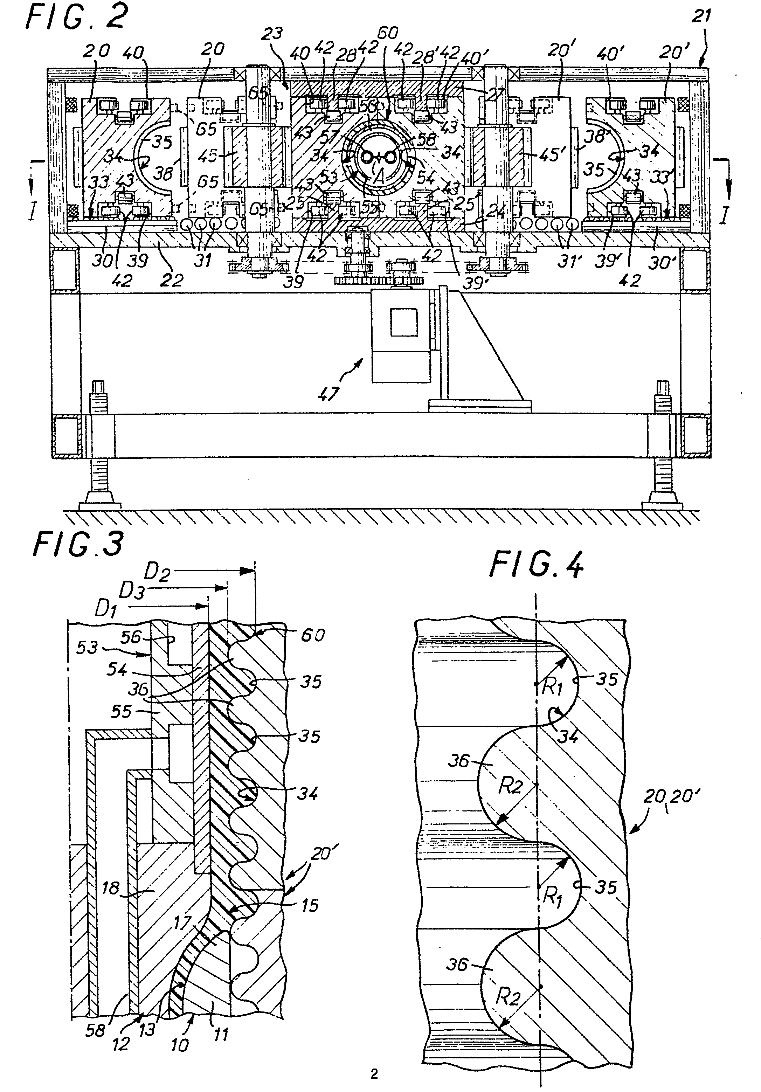

Le document FR-A-2 237 107 décrit un appareillage propre à la fabrication en continu, par extrusion, d'un profilé tubulaire en matière synthétique ayant ainsi d'un seul tenant une surface interne lisse et une surface externe munie d'aspérités de configuration quelconque, et par exemple, d'ailettes en anneaux, tel qu'illustré à la figure 4.

Cet appareillage comporte une filière d'extrusion tubulaire formée d'une matrice externe et d'un poinçon interne, en combinaison avec, d'une part, deux jeux de coquilles de moulage présentant chacune une empreinte de moulage munie transversalement de gorges à section transversale circulaire alternant avec des nervures de section également circulaire, propres ainsi à la formation des ailettes recherchées, et, pour chacun desdits jeux de coquilles de moulage, des moyens de convoyage propres à une circulation continue de celles-ci suivant un trajet en boucle fermée comportant notamment une branche aller rectiligne, qui s'étend parallèlement à l'axe de la filière, de part et d'autre du débouché de celle-ci, d'un premier côté de cet axe pour l'un desdits jeux de coquilles de moulage et de l'autre côté de cet axe pour l'autre de ceux-ci, et au cours de laquelle, d'un desdits jeux à l'autre, les coquilles de moulage se trouvent appariées de manière à former conjointement des anneaux successifs de moulage, et, d'autre part, dans le prolongement du poinçon de la filière, un mandrin de lissage, ledit mandrin de lissage et lesdites coquilles de moulage définissant conjointement la cavité de moulage propre à la formation du profilé tubulaire recherché.

Les moyens de convoyage mis en œuvre, non décrits en détail dans le document FR-A-2 377 107, peuvent, en variante, être du type de ceux décrits plus complètement dans le document US-A-2 586 822 pour un appareillage appliqué à la fabrication d'un profilé non tubulaire.

Ils comportent alors, pour la branche aller du trajet des coquilles de moulage, des engrenages propres à engrener avec une crémaillère que chaque coquille de moulage présente à cet effet à son dos, des moyens de rotation contrôlés couplés en rotation auxdits engrenages, et un guide avec lequel lesdites coquilles de moulage entrent en prise l'une après l'autre.

Tel qu'il résulte de la figure 4 du document FR-A-2 237 107 mentionné ci-dessus, les nervures des coquilles de moulage de l'appareillage concerné, qui alternent avec des gorges, ont, comme ces dernières, une section transversale globalement circulaire, une telle section s'étendant dans l'un et l'autre cas sur une demi-circonférence.

Selon toute apparence, le rayon de courbure de la section transversale d'une telle gorge y est égal à celui de la section transversale d'une nervure.

La présente invention est fondée sur l'observation, confirmée par le calcul et les réalisations pratiques, qu'il est particulièrement avantageux, pour le profilé tubulaire obtenu, que le rayon de courbure de la section transversale d'une gorge d'une coquille de moulage soit inférieur à celui de la section transversale d'une nervure.

La présente invention a donc tout d'abord pour objet un appareillage pour la fabrication en continu de profilés tubulaires en matière thermoplastique extrudable ayant une surface interne lisse et une surface externe munie d'ailettes en anneaux, du genre comportant une filière d'extrusion tubulaire formée d'une matrice externe et d'un poinçon interne, en combinaison avec, d'une part, deux jeux de coquilles de moulage présentant chacune une empreinte de moulage munie transversalement de gorges à section transversale circulaire alternant avec des nervures de section également circulaire, propres ainsi à la formation des ailettes recherchées, et, pour chacun desdits jeux de coquilles de moulage, des moyens de convoyage propres à une circulation continue de celles-ci suivant un trajet en boucle fermée comportant notamment une branche aller rectiligne, qui s'étend parallèlement à l'axe de la filière, de part et d'autre du débouché de celle-ci, d'un premier côté de cet axe pour l'un desdits jeux de coquilles de moulage et de l'autre côté de cet axe pour l'autre de ceux-ci, et au cours de laquelle, d'un desdits jeux à l'autre, les coquilles de moulage se trouvent appariées de manière à former conjointement des anneaux successifs de moulage, et, d'autre part, dans le prolongement du poinçon de la filière, un mandrin de lissage, ledit mandrin de lissage et lesdites coquilles de moulage définissant conjointement la cavité de

2

moulage propre à la formation du profilé tubulaire recherché, et caractérisé en ce que le rayon de courbure d'une gorge d'une coquille de moulage est inférieur à celui d'une nervure d'une telle coquille de moulage.

En pratique, du fait que les coquilles de moulage mises en œuvre présentent ainsi une alternance de gorges et de nervures, il se produit une variation périodique du volume de moulage à combler à chaque instant par la matière extrudée.

Il est possible, au moins pour certaines applications, de se satisfaire des fluctuations périodiques de débit ainsi imposées à l'extrudeuse alimentant la filière d'extrusion.

Mais, pour d'autres applications, ces fluctuations de débit peuvent être à l'origine de perturbations de fonctionnement en amont, parfois difficiles à maîtriser et à contrôler.

C'est pourquoi, suivant un développement de l'invention, il est proposé dans ce cas de commander les moyens de convoyage associés aux coquilles de moulage de manière à ce qu'ils assurent à celles-ci, le long de la branche aller rectiligne de leur trajet, une vitesse d'avance modulée de part et d'autre d'une vitesse moyenne qui correspond à un débit constant de la filière d'extrusion, et qui, par exemple, est asservie, de manière connue en soi, à un régulateur de vitesse sensible au débit de cette filière.

Dans ce cas, il y a à tout instant une adéquation entre le volume de moulage à remplir et le débit de la filière d'extrusion, ce qui élimine tout risque de perturbations de fonctionnement en amont.

En outre, avec cette disposition, les éventuelles difficultés que pourrait avoir à remplir correctement la cavité de moulage une matière synthétique ne présentant à l'état plastique qu'une faible viscosité se trouvent écartées, ce qui évite, dans le produit fini, toute présence de contrainte interne susceptible de nuire au bon usage de celui-ci.

Quoi qu'il en soit, il résulte de la présence de nervures sur une coquille de moulage, qui sont d'extension axiale non négligeable, la formation, pour la cavité de moulage correspondante, de zones de volume réduit, dans laquelle la matière extrudée se trouve laminée, et, par contraste, cette matière est l'objet d'une détente dans les zones de volume supérieur de cette cavité de moulage qui, en alternance avec les précédentes, correspondent aux gorges des coquilles de moulage.

Dans une zone de laminage, les chaînes moléculaires constitutives de la matière extrudée sont l'objet d'une orientation préférentielle suivant l'axe longitudinal du profilé tubulaire obtenu, favorable à une bonne résistance dans ce sens de ce profilé.

Et, dans les zones de détente, qui alternent avec les précédentes, ces chaînes moléculaires sont l'objet d'un redressement transversal, favorable à une bonne résistance transversale à l'écrasement du profilé tubulaire obtenu.

Quoi qu'il en soit, en raison même du profil particulier des ailettes en anneaux qu'il comporte à sa périphérie, un profilé tubulaire obtenu suivant l'invention présente avantageusement, vis-à-vis d'un profilé tubulaire de l'art antérieur ayant même poids au mètre, du type par exemple de celui représenté à la figure 4 de la demande de brevet français mentionnée ci-dessus, des caractéristiques mécaniques supérieures, ou, à caractéristiques mécaniques égales, son poids au mètre est avantageusement inférieur.

En raison de l'intérêt propre que présente ainsi un tel profilé, la présente invention a encore pour objet un profilé tubulaire à surface interne lisse et surface externe munie d'ailettes en anneaux alternant avec des gorges, ce profilé tubulaire étant caractérisé en ce que, obtenu par exemple à l'aide d'un appareillage du type de celui succinctement décrit ci-dessus, ses ailettes ont une section transversale circulaire, les gorges avec lesquelles alternent lesdites ailettes ont également une section transversale circulaire, et le rayon de courbure de la section transversale desdites ailettes est inférieur à celui de la section transversale desdites gorges.

Suivant un développement de l'invention, un allègement supplémentaire de ce profilé peut être obtenu, à caractéristiques mécaniques égales, en associant au processus d'extrusion un processus d'expansion par bullage chimique interne, connu en soi, soit que, pour des vitesses constantes des coquilles de moulage vis-à-vis de la filière d'extrusion une faible expansion soit obtenue dans les zones de faible épaisseur du profilé tubulaire recherché, en raison du laminage dans ces zones, et que conjointement une expansion supérieure à la précédente soit obtenue dans les zones de plus grande épaisseur de ce profilé, en raison de la descente dans ces zones, soit, au contraire, que par une modulation appropriée de cette vitesse, du type de celle suggérée ci-dessus, un bullage régulier soit recherché tout au long du profilé.

Les objets de l'invention, leurs caractéristiques et leurs avantages ressortiront d'ailleurs de la description qui va suivre, à titre d'exemple, en référence aux dessins schématiques annexés sur lesquels :

la figure 1 est une vue en coupe axiale d'un appareillage suivant l'invention, suivant la ligne I-I de la figure 2 ;

la figure 2 est une vue en coupe transversale de cet appareillage, suivant la ligne II-II de la figure 1 ;

la figure 3 reprend à échelle supérieure un détail de la figure 1 repéré par un encart III sur cette figure 1 ;

la figure 4 est, à échelle encore supérieure, une vue partielle en coupe axiale d'une coquille de moulage ;

la figure 5 est un bloc diagramme illustrant un asservissement de l'appareillage suivant l'invention ;

la figure 6 est une vue en coupe axiale analogue à celle de la figure 1 pour une variante de réalisation de l'appareillage suivant l'invention.

De manière connue en soi, et tel qu'illustré sur ces figures, l'appareillage suivant l'invention comporte une filière d'extrusion tubulaire 10, formée d'une matrice externe 11 et d'un poinçon interne 12 disposé axialement dans cette matrice de manière à former avec celle-ci un volume annulaire 13 propre au passage de la matière extrudée qu'elle est appelée à mettre en forme, et, à cet effet, elle est desservie par une extrudeuse 14.

Ces dispositions étant bien connues par elles-mêmes, elles ne seront pas décrites plus en détail ici.

Au débouché 15 de la filière 10, les lèvres 17, 18 de celle-ci formées respectivement par sa matrice externe 11 et son poinçon interne 12, figure 3, vont en s'évasant vers l'extérieur.

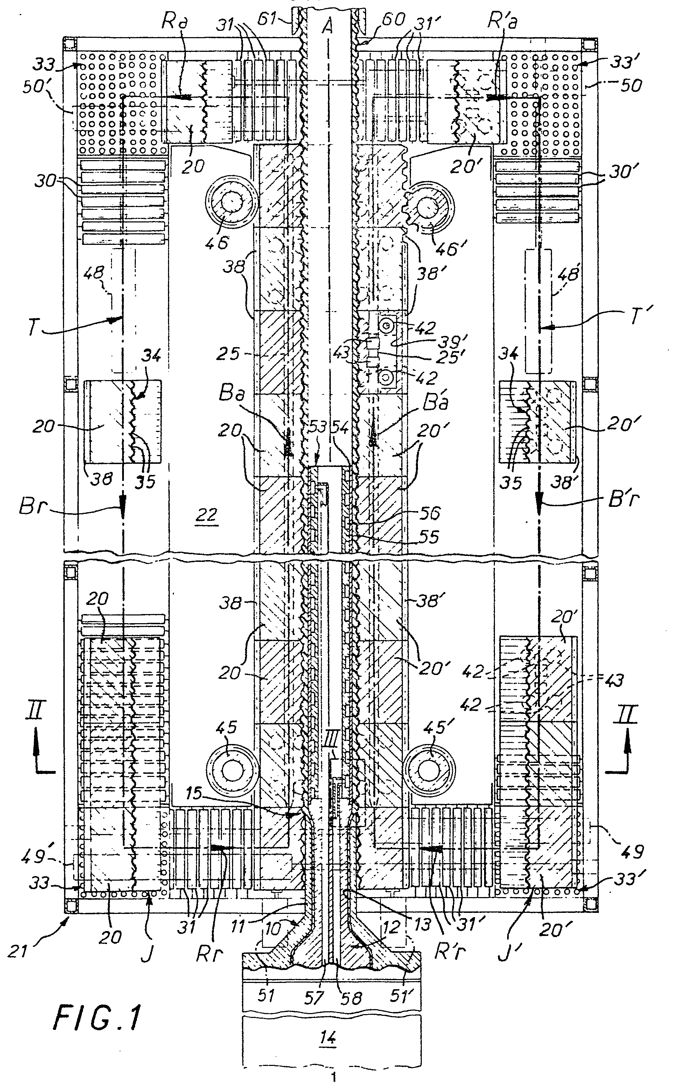

Pour la mise en œuvre de l'invention, il est associé à cette filière d'extrusion 10, deux jeux J, J' de coquilles de moulage semblables 20, 20' et, pour chacun de ces jeux J, J' de coquilles de moulage, des moyens de convoyage propres à assurer une circulation continue de celles-ci suivant un trajet en boucle fermée schématisé par un trait interrompu T, T' à la figure 1 et comportant notamment une branche aller rectiligne, Ba, B'a, qui s'étend parallèlement à l'axe A de la filière 10, de part et d'autre du débouché 15 de celle-ci, d'un premier côté de cet axe pour le jeu J, et de l'autre côté de celui-ci pour le jeu J'.

Dans l'exemple de réalisation représenté, les trajets T, T' se font dans un même plan horizontal, symétriquement de part et d'autre d'un plan vertical passant par l'axe A de la filière 10.

Pour le support des coquilles de moulage 20, 20', l'appareillage suivant l'invention comporte un bâti, désigné par la référence générale 21 sur les figures.

Ce bâti 21 ne sera pas décrit dans tous ses détails ici.

Il suffira de préciser qu'il comporte à mi-hauteur une sole 22.

Parallèlement à l'axe A de la filière 10, le bâti 21 porte, pour définition de la branche aller rectiligne Ba, B'a du trajet T, T' des coquilles de moulage 20, 20', un guide fixe 23.

Dans l'exemple de réalisation représenté, celui-ci comporte un plancher 24, porté par la sole 22 et muni en saillie, de part et d'autre du plan vertical passant par l'axe A de la filière 10, de deux rails rectilignes parallèles 25, 25', et un plafond 27, porteur en saillie, en correspondance avec les rails 25, 25' précédents, de deux rails 28, 28' semblables.

De part et d'autre du guide 23, qui occupe une position centrale, et parallèlement à ce guide, la sole 22 porte, pour définition de la branche retour Br, B'r du trajet T, T' des coquilles de moulage 20, 20', dans l'exemple de réalisation représenté, deux alignements de rouleaux 30, 30' propres à supporter ces coquilles de moulage.

Les branches retour Br, B'r des trajets T, T' sont donc dans ce cas elles aussi rectilignes.

Il en est de même, dans l'exemple de réalisation représenté, des tronçons de raccordement Ra, R'a et Rr, R'r reliant ces branches entre elles.

Dans l'exemple de réalisation représenté, ces tronçons de raccordement sont en outre perpendiculaires aux branches rectilignes qu'ils raccordent, et ils sont définis par des alignements de rouleaux 31, 31' propres à porter les coquilles de moulage 20, 20'.

A la jonction des alignements des rouleaux 30, 30' d'une part et 31, 31' d'autre part, dans les zones d'angle correspondantes, sont disposées des plaques à billes 33, 33' propres à servir de plaques de changement de direction pour les coquilles de moulage 20, 20'.

Ces coquilles de moulage forment chacune un bloc globalement hémi-cylindrique à volume extérieur hors-tout globalement parallélépipédique.

Elles sont appariées deux à deux d'un jeu J, J' à l'autre, c'est-à-dire que deux coquilles de moulage homologues 20, 20' de ces jeux sont adaptées à former conjointement, autour de l'axe A de la filière 10, un anneau de moulage, en se fermant l'une l'autre avant le débouché 15 de celle-ci.

Leur face frontale, celle destinée à être dirigée vers l'axe A de la filière 10, parallèlement à cet axe, et à former donc une empreinte de moulage 34, est globalement hémi-cylindrique et est munie de gorges 35 propres à la formation d'aspérités.

Dans l'exemple de réalisation représenté, s'agissant de la formation d'aspérités en forme d'ailettes annulaires, les gorges 35 de l'empreinte de moulage 34 d'une coquille de moulage 20, 20' s'étendent transversalement vis-à-vis de l'axe A de la filière 10, et donc, transversalement vis-à-vis d'une telle coquille de moulage.

Ces gorges 35 sont à section transversale circulaire, et elles alternent avec des nervures 36 qui sont également à section transversale circulaire ; en pratique, dans l'exemple de réalisation représenté, chacune de ces sections transversales s'étend sur une demi-circonférence, mais il n'en est pas obligatoirement ainsi.

Suivant l'invention, et tel qu'il est mieux visible à la figure 4, le rayon $R_1$ de la section transversale d'une gorge 35 est inférieur à celui $R_2$ de la section transversale d'une nervure 36.

Sur leur face dorsale, celle destinée à être opposée à l'axe A de la filière 10, les coquilles de moulage 20, 20' portent chacune une crémaillère 38, 38'.

Les coquilles de moulage 20, 20' étant toutes semblables, leurs crémaillères 38, 38' se mettent deux à deux dans le prolongement l'une de l'autre, pour chaque jeu J, J' de coquilles de moulage, lors des branches rectilignes Ba, B'a des trajets T, T' correspondants.

Pour leur engagement sur les rails 25, 25' du guide fixe 23, les coquilles de moulage 20, 20' comportent chacune, longitudinalement, sur leur face inférieure, une saignée 39, 39', figure 2.

4

0 005 104

De même, pour leur engagement sur les rails 28, 28' de ce guide fixe 23, elles comportent chacune, longitudinalement, sur leur face supérieure, une saignée 40, 40'.

Dans l'exemple de réalisation représenté, des moyens de roulement sont interposés entre chaque coquille de moulage 20, 20' et l'un quelconque des rails 25, 25', 28, 28' : il s'agit, pour chaque coquille de moulage, de galets 42 destinés à coopérer avec les flancs des rails 25, 25' et 28, 28', et de galets 43 destinés à coopérer avec la tranche de ces rails ; ces galets sont montés rotatifs sur les coquilles de moulage 20, 20'.

Pour la branche rectiligne Ba, B'a des trajets T, T', les moyens de convoyage associés aux coquilles de moulage 20, 20' comportent, en association avec le guide fixe 23, un engrenage moteur 45, 45', disposé à l'entrée de ce guide fixe, du côté de la filière 10, et un engrenage frein 46, 46', disposé à la sortie du guide fixe 23.

Ces engrenages 45, 45' et 46, 46' sont adaptés à engrener avec les crémaillères 38, 38' des coquilles de moulage.

Par des moyens de transmission appropriés, à pignons et chaînes par exemple, les engrenages moteurs 45, 45', sont conjointement couplés en rotation avec des moyens de rotation contrôlés 47.

Il peut en être de même pour les engrenages freins 46, 46'.

Mais, en variante, ceux-ci peuvent être couplés en rotation avec un frein.

Quoi qu'il en soit, les dispositions sont telles que les engrenages freins 46, 46' ont tendance à tourner à une vitesse inférieure à celle des engrenages moteurs 45, 45', en sorte que, le long de la branche rectiligne Ba, B'a des trajets T, T', les coquilles de moulage 20, 20' présentes sur cette branche de trajet rectiligne se trouvent successivement maintenues au contact les unes des autres.

En association avec les rouleaux 30, 30' les moyens de convoyage associés aux coquilles de moulage 20, 20' le long des branches rectilignes Br, B'r de leur trajet T, T' comportent, dans l'exemple de réalisation représenté, des vérins 48, 48' ; de tels vérins n'ont été que schématisés en traits interrompus sur la figure 1, et, il s'agit, en l'espèce, de vérins propres à agir par traction.

De même, des vérins 49, 49', propres à agir par traction, et des vérins 50, 50', propres à agir par poussée, sont associés aux coquilles de moulage 20, 20' pour les tronçons rectilignes Rr, R'r et Ra, R'a de leur trajet T, T'.

Enfin, des vérins 51, 51', propres à agir par poussée, sont encore associés aux coquilles de moulage 20, 20' à l'entrée du guide fixe 23, pour leur introduction dans ce guide fixe.

Par ailleurs, un mandrin de lissage 53 s'étend dans le prolongement du poinçon 12 de la filière 10, en continuité avec ce poinçon.

Sur une partie au moins de sa longueur, ce mandrin de lissage 53 est refroidi et il comporte à cet effet des canaux propres à la circulation interne d'un fluide de refroidissement.

Dans l'exemple de réalisation représenté, le mandrin de lissage 53 comporte un manchon externe lisse 54 gainant un tube interne 55 à la périphérie duquel est formée une gorge hélicoïdale 56 appartenant aux canaux propres à la circulation d'un fluide de refroidissement : à son extrémité axialement la plus éloignée de la filière 10, cette gorge 56 est en liaison avec une tubulure 57 propre à son alimentation en fluide de refroidissement, et, à son extrémité axialement la plus proche de la filière 10, elle est en liaison avec une tubulure 58 propre à l'évacuation de ce fluide de refroidissement.

Dans l'exemple de réalisation représenté sur les figures 1 à 3, ces tubulures 57, 58 s'étendent parallèlement l'une à l'autre, dans l'axe du poinçon 12 de la filière 10, et, suivant des modalités connues en elles-mêmes, elles sont reliées à des moyens propres à une alimentation, à une bonne circulation, et à un refroidissement du fluide qu'elles véhiculent.

On peut par exemple utiliser à cet effet une tête d'équerre, ou une tête offset, ou encore faire passer les tubulures 57, 58 par les croisillons portant de manière usuelle le poinçon 12, pour liaison de ces tubulures à des périphériques échangeurs, les pressions et débit étant obtenus de façon classique par pompe de circulation et jeu de vannes.

De ce qui précède, il résulte que, en fonctionnement, les coquilles de moulage 20, 20' convenablement appariées deux à deux d'un des jeux J, J' à l'autre, forment conjointement, autour du mandrin de lissage 53, des anneaux successifs de moulage définissant avec ce mandrin de lissage une cavité de moulage, au droit du débouché 15 de la filière 10.

Cette cavité de moulage, qui est annulaire, a une surface interne globalement cylindrique, de diamètre D1 défini par le diamètre extérieur du mandrin de lissage 53, et une surface externe annelée entre deux diamètres D2, D3 définis, le premier par le fond des gorges 35 des coquilles de moulage 20, 20' et le second, par la crête des nervures 36 de ces coquilles de moulage, figure 3.

Dans la définition de cette cavité de moulage, les coquilles de moulage 20, 20' se remplacent successivement en continu les unes par les autres, ces coquilles de moulage se trouvant en continu écartées de la filière 10 par les moyens de convoyage qui leur sont associés, comme explicité ci-dessus.

Les lèvres 17, 18 de la filière 10, qui s'évasent vers l'extérieur, sont dirigées vers les coquilles de moulage 20, 20', en sorte qu'un bon remplissage de la cavité de moulage correspondante se trouve assuré, au fur et à mesure de l'extrusion de la matière synthétique concernée.

Pour les zones de moindre dimension radiale de la cavité de moulage, au droit des nervures 36 des coquilles de moulage 20, 20', cette matière synthétique est laminée parallèlement à l'axe de la filière 10 ; pour les zones de plus grande dimension radiale de la cavité de moulage, au droit des gorges 35 des

5

coquilles de moulage 20, 20', elle est au contraire l'objet d'une détente.

Dans tous les cas, la vitesse V imposée aux coquilles de moulage 20, 20' par les pignons 45, 45' et 46, 46' le long de la branche rectiligne Ba, B'a de leur trajet T, T' est choisie telle que, en liaison avec le débit de l'extrudeuse 14, et compte tenu de la nature de la matière synthétique mise en œuvre, il y a un bon remplissage de la cavité de moulage.

Suivant un développement de l'invention, et pour tenir compte des fluctuations périodiques du volume de la cavité de moulage à raison de l'alternance des gorges 35 et nervures 36, la vitesse d'avance V des coquilles de moulage 20, 20', le long de la branche rectiligne Ba, B'a de leur trajet T, T' est modulée de part et d'autre d'une vitesse moyenne Vm correspondant à un débit constant pour l'extrudeuse 14.

Autrement dit, cette vitesse d'avance V est faite supérieure à la vitesse moyenne Vm lorsque c'est une gorge 35 des coquilles de moulage 20, 20' concernées qui se trouve au droit du débouché 15 de la filière 10, et inférieure à cette vitesse moyenne Vm lorsque, au contraire, c'est une nervure 36 des coquilles de moulage 20, 20' qui se trouve au droit de ce débouché.

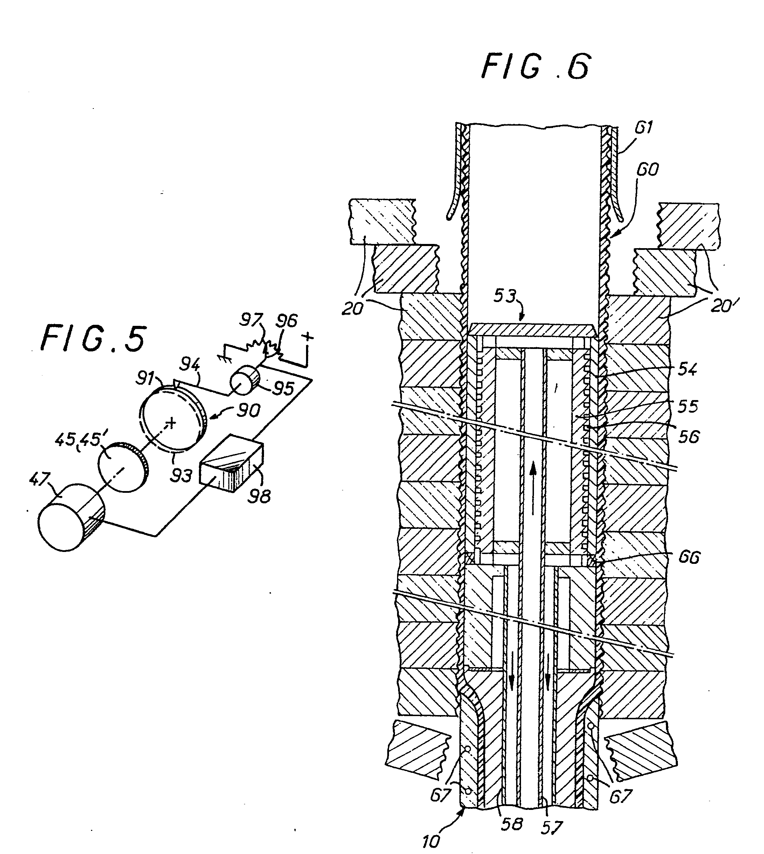

Par exemple, et tel qu'illustré par le bloc diagramme de la figure 5, il est mis en œuvre une came rotative 90, dont le contour 91 est à l'image d'un pas, en forme d'onde, de l'empreinte de moulage 34 d'une coquille de moulage 20, 20', ce pas étant formé par la section transversale d'une gorge 35 et la section transversale d'une nervure 36.

Ainsi par rapport à un cercle 93 représenté en trait mixte et figuratif d'une épaisseur moyenne de référence pour le profilé recherché, le contour 91 a une partie radialement en surépaisseur, correspondant à la nervure du pas concerné, et une partie radialement en retrait correspondant à la gorge de ce pas.

Bien entendu, les écarts de profondeur entre ces deux parties du contour 91 de la came 90 peuvent être différents de ceux existant réellement entre une gorge et une nervure d'une coquille de moulage, mais le facteur de correction correspondant doit rester constant tout au long de ce contour 91.

La came 90 est calée sur l'un quelconque des engrenages 45, 45', et la transmission correspondante est telle qu'à un tour de cette came 90 correspond l'avance d'un pas pour les coquilles de moulage 20, 20'.

Avec le contour 91 de la came 90 coopère un palpeur 94 auquel est asservie l'alimentation électrique des moyens de rotation contrôlés 47, lesquels sont en pratique constitués par exemple par un simple moteur.

Par exemple, et tel que représenté, par une transmission 95 introduisant une démultiplication convenable, le palpeur 94 est calé sur le curseur 96 d'un potentiomètre rotatif 97, et celui-ci pilote en conséquence, suivant des modalités qui sont du domaine de l'homme de l'art, un variateur 98 interposé sur l'alimentation du moteur 47.

En fonctionnement, les mouvements du palpeur sont proportionnés aux variations recherchées pour la vitesse d'avance V, et celles-ci sont répercutées sur le moteur 47.

Cette vitesse d'avance V est donc modulée de part et d'autre d'une vitesse moyenne Vm, comme recherché.

D'une manière connue en soi, qui ne sera donc pas détaillée ici, cette vitesse moyenne Vm est elle-même sous le contrôle d'un régulateur de vitesse sensible au débit de la filière 10 (non détaillé sur les figures).

A la sortie du guide fixe 23, les coquilles de moulage 20, 20' sont chacune à leur tour prises en charge par les vérins 50, 50' qui sont à commande alternative, et qui les poussent sur les rouleaux 30, 30' des tronçons Ra, R'a de leur trajet T, T' perpendiculairement à l'axe A de la filière 10, jusqu'aux plaques à billes 33, 33' correspondantes.

Ainsi, le dégagement successif des coquilles de moulage 20, 20' vis-à-vis du profilé tubulaire 60 formé se fait avantageusement à faces parallèles, perpendiculairement à l'axe de ce profilé tubulaire.

Par les vérins 48, 48', les coquilles de moulage 20, 20' sont déplacées sur les rouleaux 30, 30' de la branche retour Br, B'r de leur trajet T, T' jusqu'aux plaques à billes 33, 33' correspondantes, et, de là, elles sont ramenées à l'entrée du guide fixe 23 par les vérins 49, 49', sur les rouleaux 31, 31' du tronçon Rr, R'r dudit trajet, à une vitesse qui peut avantageusement être supérieure à leur vitesse le long de la branche aller Ba, B'a de leur dit trajet.

Elles peuvent dès lors être à nouveau introduites à tour de rôle dans le guide fixe 23, par les vérins 51, 51'.

Ces opérations s'effectuent cycliquement en continu, au fur et à mesure de l'extrusion de la matière synthétique concernée.

Ainsi qu'on l'aura noté, le refroidissement de celle-ci se fait avantageusement à contre-courant, la circulation de fluide de refroidissement dans le mandrin de lissage 53 se faisant de l'extrémité libre de ce mandrin de lissage vers la filière d'extrusion 10.

En outre, et suivant des dispositions usuelles en la matière, le long de la branche rectiligne Ba, B'a de leur trajet T, T', au-delà du mandrin de lissage 53, les coquilles de moulage 20, 20' passent dans une zone où un refroidissement intense peut leur être prodigué, par air froid ou arrosage s'il y a lieu, la longueur de cette zone étant suffisante pour que, à sa sortie, le profilé tubulaire 60 présente toute la rigidité souhaitable, avant que s'en écartent les coquilles de moulage 20, 20'.

Au-delà de cette zone, le profilé tubulaire 60, ainsi libéré, peut, si désiré, et tel que schématiquement représenté à la figure 1, être pris en charge par une goulotte 61 et être dirigé sur une zone supplémentaire de refroidissement ainsi que sur divers postes de traitement classiques, tels que sciage, réception, marquage, etc...

Bien entendu, et de manière connue en soi, pour l'évacuation de l'air refoulé par la matière extrudée, les coquilles de moulage 20, 20' peuvent être munies de canaux d'évacuation d'air, et être par exemple, à cet effet, constituées de métal fritté naturellement poreux (non détaillé sur les figures).

Toute matière synthétique extrudable peut être mise en œuvre, et par exemple les polymères halogénés, les polymères et copolymères de styrène ou de ses dérivés, les polyacétales et polymères apparentés, les polyoléfines, et éventuellement, les résines acryliques et métacryliques, les polycarbonates et polymères correspondants résistant aux températures élevées.

De telles matières synthétiques présentent un certain coefficient de dilatation thermique, parfois élevé, le profilé tubulaire 60 formé a tendance à diminuer de section au fur et à mesure de son refroidissement, et donc à se resserrer sur le mandrin de lissage 53.

Par suite, extérieurement, celui-ci est de préférence globalement tronconique, son diamètre extérieur allant en diminuant sur une partie au moins de sa longueur, entre le poinçon 12 et son extrémité libre.

Tel que précisé ci-dessus, l'appareillage suivant l'invention permet l'obtention de profilés tubulaires présentant, les autres conditions étant égales par ailleurs, des caractéristiques techniques supérieures à celles des profilés tubulaires lisses classiques.

Pour illustrer cet avantage, on prendra ci-après, à titre d'exemple, un profilé tubulaire témoin $T_1$, de diamètre externe de 400 mm, et ayant une épaisseur moyenne de paroi de 8,4 mm, compte tenu des tolérances, relativement assez larges, dans ce domaine.

Le moment d'inertie par cm de longueur d'un tel profilé tubulaire est égal à 0,040 et son poids au mètre pour une matière synthétique de densité 1,42 est de 14,600 kg.

Un tel profilé tubulaire $T_1$ est classé dans la catégorie 9 000 kg/m² suivant la méthode française d'homologation.

Avec des coquilles de moulage à section transversale de nervure et de gorge en demi-cercle ayant des rayons de courbure égaux de 3,5 mm on obtient, suivant l'invention, pour cette même catégorie de 9 000 kg/m², un profilé tubulaire $T_2$ ayant une épaisseur moyenne de 7 mm, un moment d'inertie de 0,041 par cm de longueur, et un poids au mètre de 12,100 kg.

Une économie de poids de 17,2 % est donc ainsi réalisée.

Cette économie peut être encore améliorée si on applique à la matière synthétique expansée le processus d'allègement par bullage chimique mentionné ci-dessous.

Le profilé tubulaire $T_3$ correspondant ainsi obtenu, a une densité de 0,85, une épaisseur moyenne de 9 mm, et un poids au mètre de 10,500 kg.

Le gain en poids est alors de 28 %.

Avec ce processus de bullage chimique, on peut, soit, alléger encore le profilé tubulaire, et donc diminuer le poids au mètre de celui-ci, mais en faisant passer ce profilé tubulaire dans une catégorie inférieure de 6 000 kg/m² par exemple, soit, au contraire, améliorer la catégorie de ce profilé tubulaire, en maintenant sa densité à une valeur relativement notable.

Dans le tableau récapitulatif 1 ci-après, dans lequel sont rassemblés les divers éléments numériques donnés ci-dessus, le profilé tubulaire $T_4$ correspond au premier cas, et le profilé tubulaire $T_5$ au second.

Tableau 1

| Référence profilé tubulaire | Catégorie kg/m² | Densité | Epaisseur moyenne mm | Moment d'inertie par cm | Poids au mètre | Economie de poids |
|---|---|---|---|---|---|---|
| $T_1$ | 9 000 | 1,42 | 8,4 | 0,040 | 14,600 | 0 (témoin) |
| $T_2$ | 9 000 | 1,42 | 7 | 0,041 | 12,100 | 17,2 % |
| $T_3$ | 9 000 | 0,95 | 9 | 0,089 | 10,510 | 28 % |
| $T_4$ | 6 000 | 0,65 | 9 | 0,089 | 7,190 | 50,8 % |
| $T_5$ | 13 500 | 1,2 | 9 | 0,089 | 13,050 | 7,7 % |

Le tableau récapitulatif 2 donné ci-après correspond, les autres conditions étant égales par ailleurs, à un cas pratique de réalisation pour lequel, suivant l'invention, le rayon de courbure $R_1$ des gorges 35 des coquilles de moulage 20, 20' est inférieur à celui $R_2$ des nervures 36 de ces coquilles de moulage, le rayon $R_1$ étant dans ce cas de 3 mm et le rayon $R_2$ de 4 mm.

Dans ce tableau 2, le profilé $T_1$ est le même profilé témoin que précédemment et les profilés $T'_2$, $T'_3$, $T'_4$, $T'_5$, qui sont des profilés suivant l'invention, correspondent chacun respectivement aux profilés $T_2$, $T_3$, $T_4$, $T_5$ précédents.

Il ressort de ce qui précède que ces profilés T'$_2$, T'$_3$, T'$_4$, T'$_5$, suivant l'invention, se caractérisent en ce que ils ont une surface interne lisse et une surface externe munie d'ailettes en anneaux alternant avec des gorges, et en ce que, leurs ailettes et leur gorge ayant une section transversale circulaire, le rayon de la section transversale d'une telle ailette est inférieur à celui de la section transversale d'une telle gorge.

Tableau 2

| Référence profilé tubulaire | Catégorie kg/cm$^2$ | Densité | Epaisseur moyenne mm | Moment d'inertie par cm | Poids au mètre | Economie de poids |
|---|---|---|---|---|---|---|
| T$_1$ | 9 000 | 1,42 | 8,4 | 0,040 | 14,600 | 0 (témoin) |
| T'$_2$ | 9 000 | 1,42 | 6,2 | 0,041 | 10,750 | 26 % |
| T'$_3$ | 9 000 | 0,95 | 8,0 | 0,089 | 9,360 | 36 % |
| T'$_4$ | 6 000 | 0,65 | 8,0 | 0,089 | 6,400 | 56 % |
| T'$_5$ | 13 500 | 1,2 | 8,0 | 0,089 | 11,820 | 19 % |

Les caractéristiques données dans ces tableaux 1 et 2 et notamment celles relatives au poids au mètre des profilés tubulaires concernés, ont été établies par le calcul et elles se trouvent confirmées par les réalisations pratiques effectuées.

D'une simple comparaison de ces tableaux 1 et 2, il ressort que, les conditions étant égales par ailleurs, pour chaque profilé T'$_2$ T'$_3$ T'$_4$ T'$_5$, l'économie de poids obtenue suivant l'invention à l'égard du profilé témoin T$_1$ est supérieure à celle obtenue pour le profilé T$_2$, T$_3$, T$_4$, T$_5$ à rayons de courbure R$_1$ R$_2$ égaux correspondants.

En pratique, il est souhaitable de conserver aux profilés en cause une épaisseur moyenne minimale pour en éviter un poinçonnement, et de n'avoir que des variations de hauteur compatibles avec les moyens d'assemblage usuellement mis en œuvre pour de tels profilés.

Des travaux effectués, il ressort ainsi que le rayon de courbure R$_2$ des nervures 36 des coquilles de moulage 20, 20' ne doit de préférence être supérieur au rayon R$_1$ des gorges 36 de ces coquilles de moulage que dans une proportion comprise entre 1,1 et 1,8, et de préférence entre 1,25 et 1,35.

Pour un profilé suivant l'invention c'est donc le rayon des gorges qui est supérieur, dans les mêmes proportions, à celui des ailettes.

Suivant la variante de réalisation illustrée par la figure 6, seule l'extrémité du mandrin de lissage 53 est refroidie, et les tubulures 57, 58 correspondantes sont coaxiales.

En outre, dans cette variante, l'approche de la filière 10 par les coquilles de moulage 20, 20' ne se fait pas par faces parallèles, c'est-à-dire perpendiculairement à l'axe de cette filière, comme précédemment, mais par rotation, le convoyage des coquilles de moulage étant assuré par deux chenilles continues.

La présente invention ne se limite d'ailleurs pas aux formes de réalisation décrites et représentées, mais englobe toute variante d'exécution.

S'agissant des coquilles de moulage 20, 20', celles-ci peuvent par exemple être réalisées en trois parties coaxiales successivement emboîtées les unes dans les autres, à savoir un cadre extérieur, une fourrure hémi-cylindrique intermédiaire, et une garniture hémi-cylindrique centrale ; avec une telle constitution, seule la garniture centrale peut être réalisée en bronze, la fourrure intermédiaire, qui en permet l'adaptation au cadre extérieur, et ce dernier, pouvant l'un et l'autre être en fonte d'aluminium.

Avantageusement, de telles coquilles de moulage, qu'elles soient massives ou en plusieurs parties comportent un réseau interne de circulation de fluide de refroidissement : par exemple, un tel réseau peut avoir un orifice d'alimentation à la partie supérieure de ces coquilles de moulage, et un orifice d'évacuation à la partie inférieure de celles-ci, un siphon étant prévu entre ces deux orifices pour un maintien en permanence de fluide de refroidissement dans ces coquilles de moulage, et celles-ci défilant à l'aplomb de rampes leur délivrant, à l'avancement, un tel fluide de refroidissement.

De plus, de telles coquilles de moulage ne sont pas nécessairement toutes semblables, mais au contraire certaines d'entre elles peuvent être différentes, afin de recevoir une forme plus apte à un assemblage convenable de ces coquilles de moulage entre elles.

Enfin, les gorges et nervures de ces coquilles de moulage ne s'étendent pas obligatoirement transversalement vis-à-vis de l'axe de la filière 10, et donc vis-à-vis des coquilles de moulage qu'elles affectent ; elles peuvent au contraire être inclinées, ou même croisées, pour former ainsi un gaufrage quelconque à la surface externe des profilés tubulaires obtenus.

Dans tous les cas, et tel que schématisé en traits interrompus à la figure 2, les coquilles de moulage 20 peuvent par exemple porter en saillie des pions de centrage 65 pour engagement dans des logements en creux prévus à cet effet sur les coquilles de moulage 20'.

S'agissant du mandrin de lissage 53, et tel que schématisé par des hachures à la figure 6, un tronçon 66 d'un tel mandrin de lissage est au moins localement poreux, pour passage de fluide de refroidissement, la face interne de ce tronçon 66 étant en communication avec les canaux que comporte ce mandrin de lissage pour la circulation de fluide de refroidissement.

De la sorte, une partie du fluide de refroidissement circulant dans le mandrin de lissage 53 traverse radialement celui-ci et, se vaporisant au contact de la matière synthétique extrudée, qui est chaude, il assure d'une part un refroidissement et d'autre part une lubrification particulièrement efficace de cette matière synthétique.

S'agissant de la filière d'extrusion 10, celle-ci peut, de manière usuelle, être traversée par .des conducteurs chauds, soit qu'il s'agisse de conducteurs électriques, soit qu'il s'agisse de canalisations dans lesquelles circule un fluide de chauffage, tel que schématisé en 67 à la figure 6.

S'agissant des moyens de convoyage associés aux coquilles de moulage 20, 20', ils peuvent être différents que ceux décrits ci-dessus, et par exemple être constitués par des chenilles comme déjà mentionné.

S'agissant plus précisément de la partie de ces moyens de convoyage qui sont associés à la branche rectiligne Br, B'r du trajet T, T' des coquilles de moulage, il peut s'agir, au lieu de vérins, de convoyeurs aériens.

S'agissant enfin du guide fixe associé à la branche rectiligne Ba, B'a du trajet T, T' des coquilles de moulage, il peut être remplacé par tout moyen permettant un guidage et maintien convenables de ces coquilles de moulage pour la partie rectiligne en question de leur trajet.

## Revendications

1. Appareillage pour la fabrication en continu de profilés tubulaires en matière thermoplastique extrudable ayant une surface interne lisse et une surface externe munie d'ailettes en anneaux, du genre comportant une filière d'extrusion tubulaire (10) formée d'une matrice externe (11) et d'un poinçon interne (12) en combinaison avec, d'une part, deux jeux (J, J') de coquilles de moulage (20, 20") présentant chacune une empreinte de moulage munie transversalement de gorges (35) à section transversale circulaire alternant avec des nervures (36) de section également circulaire, propres ainsi à la formation des ailettes recherchées, et, pour chacun desdits jeux (J, J') de coquilles de moulage (20, 20'), des moyens de convoyage propres à une circulation continue de celles-ci suivant un trajet (T, T') en boucle fermée comportant notamment une branche aller (Ba, B'a) rectiligne, qui s'étend parallèlement à l'axe (A) de la filière, de part et d'autre du débouché de celle-ci, d'un premier côté de cet axe pour l'un desdits jeux de coquilles de moulage et de l'autre côté de cet axe pour l'autre de ceux-ci, et au cours de laquelle, d'un desdits jeux à l'autre, les coquilles de moulage (20, 20') se trouvent appariées de manière à former conjointement des anneaux successifs de moulage, et, d'autre part, dans le prolongement du poinçon (12) de la filière, un mandrin de lissage (53), ledit mandrin de lissage et lesdites coquilles de moulage définissant conjointement la cavité de moulage propre à la formation du profilé tubulaire recherché, caractérisé en ce que le rayon de courbure (R1) d'une gorge (35) d'une coquille de moulage est inférieur à celui (R2) d'une nervure (36) d'une telle coquille de moulage (20, 20').

2. Appareillage suivant la revendication 1, caractérisé en ce que, pour la branche aller rectiligne (Ba, B'a) du trajet (T, T') des coquilles de moulage, les moyens de convoyage assurent à celles-ci une vitesse d'avance modulée de part et d'autre d'une vitesse moyenne correspondant à un débit constant pour l'extrudeuse (14).

3. Appareillage suivant la revendication 2, dans lequel chacune des coquilles (20, 20') de moulage comporte à son dos une crémaillère (38, 38'), et, pour la branche aller rectiligne de leur trajet, les moyens de convoyage associés à ces coquilles de moulage comportent des engrenages (45, 45') propres à engrener avec les crémaillères (38, 38') des coquilles de moulage, et des moyens de rotation contrôlés couplés en rotation auxdits engrenages, caractérisé en ce que les moyens de rotation contrôlés couplés en rotation avec les engrenages des moyens de convoyage sont commandés en rotation de manière telle que ladite vitesse d'avance qui en résulte pour les coquilles de moulage soit modulée de part et d'autre de ladite vitesse moyenne.

4. Appareillage suivant la revendication 3, et du genre dans lequel, pour la branche aller rectiligne du trajet, des coquilles de moulage, les moyens de convoyage associés à ces coquilles de moulage comportent, en association avec un guide (23) avec lequel lesdites coquilles de moulage (20, 20') entrent en prise l'une après l'autre, des engrenages (45, 45') propres à engrener avec les crémaillères (38, 38') des coquilles de moulage, et des moyens de rotation contrôlés couplés en rotation auxdits engrenages, caractérisé en ce que ledit guide (23) est fixe.

5. Appareillage suivant la revendication 4, dans lequel le guide fixe (23) comporte au moins un rail (28), caractérisé en ce que chacune des coquilles de moulage (20, 20') comporte longitudinalement une saignée propre à son engagement sur ce rail, éventuellement avec interposition de moyens de roulement (42, 43).

6. Appareillage suivant l'une quelconque des revendications 4, 5 dans lequel les engrenages mis en œuvre comportent un engrenage moteur (45, 45') à l'entrée du guide fixe (23) caractérisé en ce que lesdits engrenages comportent également un engrenage frein (46, 46') à la sortie dudit guide fixe.

7. Appareillage suivant l'une quelconque des revendications 1 à 6, dans lequel, sur une partie de sa longueur au moins, le mandrin de lissage (53) est refroidi, ledit mandrin de lissage comportant à cet effet des canaux (57, 58) propres à la circulation interne d'un fluide de refroidissement, caractérisé en ce qu'un tronçon au moins du mandrin de lissage est au moins localement poreux, pour passage de fluide de refroidissement, la face interne dudit tronçon étant en communication avec les canaux (57, 58) propres à la circulation d'un tel fluide de refroidissement.

8. Appareillage suivant l'une quelconque des revendications 1 à 6, dans lequel, sur une partie de sa longueur au moins, le mandrin de lissage (53) est refroidi, ledit mandrin de lissage comportant à cet effet des canaux (57, 58) propres à la circulation interne d'un fluide de refroidissement, caractérisé en ce que seule la partie terminale du mandrin de lissage (53) est refroidie.

9. Appareillage suivant l'une quelconque des revendications 1 à 8, caractérisé en ce que, extérieurement, le mandrin de lissage (53) est globalement tronçonique, son diamètre extérieur allant en diminuant, sur un tronçon au moins de sa longueur, entre le poinçon et son extrémité libre.

10. Appareillage suivant l'une quelconque des revendications 1 à 9, caractérisé en ce que le rayon de courbure de la section transversale d'une nervure d'une coquille de moulage (20, 20') est supérieur à celui de la section transversale d'une gorge dans une proportion comprise entre 1,1 et 1,8 et de préférence entre 1,25 et 1,35.

11. Profilé tubulaire à surface interne lisse et surface externe munie d'ailettes en anneaux alternant avec des gorges, caractérisé en ce que, obtenues par exemple à l'aide d'un appareillage conforme à l'une quelconque des revendications 1 à 9, ses ailettes ont une section transversale circulaire, les gorges avec lesquelles alternent lesdites ailettes ont également une section transversale circulaire, et le rayon de courbure de la section transversale desdites ailettes est inférieur à celui de la section transversale desdites gorges.

12. Profilé tubulaire suivant la revendication 11, caractérisé en ce que le rayon de courbure de la section transversale de ses gorges R2 est supérieur à celui de la section transversale de ses ailettes R1 dans une proportion comprise entre 1,1 et 1,8 et de préférence entre 1,25 et 1,35.

13. Profilé tubulaire à surface interne lisse et surface externe, munie d'ailettes en anneaux alternant avec des gorges, caractérisé en ce que ses ailettes ont une section transversale circulaire, les gorges avec lesquelles alternent lesdites ailettes ont également une section transversale circulaire, et le rayon de courbure de la section transversale desdites ailettes est inférieur à celui de la section transversale desdites gorges.

14. Profilé tubulaire suivant la revendication 13, caractérisé en ce que le rayon de courbure de la section transversale de ses gorges est supérieur à celui de la section transversale de ses ailettes dans une proportion comprise entre 1,1 et 1,8 et de préférence entre 1,25 et 1,35.

## Claims

1. Apparatus for the continuous manufacture of tubular sections of extrudable thermoplastic material having a smooth inner surface and an outer surface provided with annular fins, of the kind comprising a tubular extrusion die (10) formed by an outer die (11) and an inner punch (12) in combination with, on the one hand, two sets (J, J') of mould shells (20, 20') each having a mould cavity transversely provided with grooves (35) of circular transverse section alternating with ribs (36) also of circular section thereby adapted to form the sought after fins, and for each one of the said sets (J, J') of mould shells (20, 20'), conveying means adapted for a continuous displacement thereof along a closed loop path (T, T') comprising in particular a rectilinear forward branch (Ba, B'a) which extends parallel to the axis (A) of the extrusion die, and on either side of the discharge thereof on a first side of the axis for one of said sets of mould shells and on the other side of the axis for the other thereof, and during which are paired one of said sets of mould shells (20, 20') with the other so as to form together successive mould rings and, on the other hand, in the continuation of the plunger (12) of the extrusion die, a smoothing mandrel (53), the said smoothing mandrel and said mould shells together defining the mould cavity adapted to form the sought-after tubular section, characterized in that the radius (R1) of curvature of a groove (35) of a mould shell is less than that (R2) of a rib (36) of such a mould shell (20, 20').

2. Apparatus according to claim 1, characterized in that for the rectilinear forward branch (Ba, B'a) of the path (T, T') of the mould shells, the conveying means ensure an advance speed modulated about an average speed corresponding to a constant flow rate of the extruder (14).

3. Apparatus according to claim 2, in which each one of the mould shells (20, 20') comprises along its back a rack (38, 38'), and for the rectilinear forward branch of their path, the conveying means associated with these moulding shells comprise gears (45, 45') adapted to mesh with the racks (38, 38') of the mould shells, and controlled rotational means coupled for rotation with the said gears, characterized in that the controlled rotational means coupled for rotation with the gears of the conveying means are rotationally controlled so that the said forward speed which results therefrom for the mould shells is modulated about the said average speed.

4. Apparatus according to claim 3, and of the kind in which, for the rectilinear forward branch of the path of the mould shells, the conveying means associated with said mould shells comprise, in associated with a guide (23) with which the said mould shells (20, 20') mesh one after another, gears (45, 45') adapted to mesh with the racks (38, 38') of the mould shells, and controlled rotational means coupled for rotation with said gears, characterized in that said guide (23) is fixed.

5. Apparatus according to claim 4, in which the fixed guide (23) comprises at least one rail (28), characterized in that each of the mould shells (20, 20') comprises, longitudinally, a groove adapted for its engagement on the rail, optionally with the interposition of roller means (42, 43).

6. Apparatus according to either one of claims 4 and 5, in which the gears employed comprise a driver gear (45, 45') at the entrance of the fixed guide (23), characterized in that the said gears also comprise a brake gear (46, 46') at the exit of the said fixed guide.

7. Apparatus according to any one of claims 1 to 6, the smoothing mandrel (53) is cooled along at least a portion of its length, the said mandrel comprising, to this end, channels (57, 58) adapted for the internal flow of cooling fluid, characterized in that at least a section of the smoothing mandrel is at least locally porous for the passage of cooling fluid, the inner face of the said section being in communication with the channels (57, 58) adapted for the flow of such a cooling fluid.

8. Apparatus according to any one of claims 1 to 6, in which the smoothing mandrel (53) is cooled along at least a portion of its length, the said smoothing mandrel comprising, to this end, channels adapted for the internal flow of a cooling fluid, characterized in that only the terminal part of the smoothing mandrel (53) is cooled.

9. Apparatus according to any one of claims 1 to 8, characterized in that, externally, the smoothing mandrel (53) is generally frustoconical, its outer diameter tapering along at least a section of its length, between the punch and its free end.

10. Apparatus according to any one of claims 1 to 9, characterized in that the radius of curvature of the transverse section of a rib of a mould shell (20, 20') is greater than that of the transverse section of a groove in a proportion included between 1.1 and 1.8 and preferably between 1.25 and 1.35.

11. A tubular section with a smooth inner surface and an outer surface provided with annular fins alternating with grooves, characterized in that, obtained for example with the help of an apparatus in conformity with any one of claims 1 to 9, its fins have a circular transverse section, the grooves with which the said fins alternate also have a circular transverse section, and the radius of curvature of the transverse section of the said fins is less than that of the transverse section of the said grooves.

12. A tubular section according to claim 1, characterized in that the radius of curvature R2 of the transverse section of its grooves is greater than that R1 of the transverse section of its fins in a proportion included between 1.1 and 1.8 and preferably between 1.25 and 1.35.

13. Tubular section with a smooth inner surface and an outer surface provided with annular fins alternating with grooves, characterized in that the fins have a circular transverse section, the grooves with which the said fins alternate also have a circular transverse section, and the radius of curvature of the transverse section of the said fins is less than that of the transverse section of the said grooves.

14. Tubular section according to claim 13, characterized in that the radius of curvature of the transverse section of its grooves is greater than that of the transverse section of its fins in a proportion included between 1.1 and 1.8 and preferably between 1.25 and 1.35.

**Ansprüche**

1. Vorrichtung zum kontinuierlichen Herstellen von rohrförmigen Profilen aus thermoplastischem, extrudierbarem Material mit einer glatten Innenfläche und einer mit ringförmigen Stegen versehenen Außenfläche, mit einer rohrförmigen Extrusionsdüse (10), die aus einer äußeren Matrize (11) gebildet ist und mit einem inneren Dorn (12) in Verbindung mit einerseits zwei Sätzen (J, J') von Formkokillen (20, 20'), welche jede einen Gußabdruck aufweist mit querverlaufenden Hohlkehlen (35) mit kreisförmigem Querschnitt abwechselnd mit Rippen (36) von ebenfalls kreisförmigem Querschnitt zur Ausbildung der gewünschten Stege und für jeden der Sätze (J, J') der Formkokillen (20, 20') Transporteinrichtungen für eine kontinuierliche Umlaufbewegung der Formkokillen entlang einer geschlossenen Strecke (T, T') mit insbesondere einem geradlinig verlaufenden Schenkel (Ba, B'a) welche sich parallel zur Achse (A) der Düse erstrecken beiderseits der Öffnung der Düse, wobei ein Satz der Formkokillen auf einer ersten Seite der Achse und der andere Satz der Formkokillen auf der anderen Seite dieser Achse angeordnet ist und wobei während des Betriebs die Formkokillen (20, 20') des einen Satzes mit denen des anderen Satzes paarweise angeordnet werden, so daß sie zusammen aufeinander folgende Formringe bilden, und andererseits in der Verlängerung des Dorns (12) der Düse mit einem Ausziehdorn (53), wobei der Ausziehdorn und die Formkokillen gemeinsam den Formhohlraum zur Ausbildung des gewünschten rohrförmigen Profils bilden, dadurch gekennzeichnet, daß der Krümmungsradius (R1) einer Hohlkehle einer Formkokille geringer ist als der Krümmungsradius (R2) einer Rippe (36) einer Formkokille (20, 20').

2. Vorrichtung nach Anspruch 1, dadurch gekennzeichnet, daß Transportmittel vorgesehen sind für den geradlinig verlaufenden Schenkel (Ba, B'a) der Strecke (T, T') der Formkokillen, um diesem eine Vorschubgeschwindigkeit zu sichern, welche beiderseits einer mittleren Geschwindigkeit reguliert wird, welche einem konstanten Ausstoß des Extruders (14) entspricht.

3. Vorrichtung nach Anspruch 2, wobei jede Formkokille (20, 20') an ihrer Rückseite eine Zahnstange (38, 38') aufweist und wobei an den geradlinig verlaufenden Schenkelnder Strecke die mit den Formkokillen verbundenen Transportmittel Zahnradgetriebe (45, 45') zum Eingriff mit den Zahnstangen (38, 38') der Formkokillen und geregelte Dreheinrichtungen aufweisen, welche in Drehung mit den Zahnradgetrieben gekuppelt sind, dadurch gekennzeichnet, daß die geregelten Dreheinrichtungen, die in Drehung mit den Zahnradgetrieben der Transportmittel gekuppelt sind derart gesteuert drehangetrieben werden, daß die sich ergebende Vorschubgeschwindigkeit für die Formkokillen beiderseits der mittleren Geschwindigkeit reguliert wird.

4. Vorrichtung nach Anspruch 3, wobei an den geradlinig verlaufenden Schenkeln der Strecke der Formkokillen die mit den Formkokillen verbundenen Transportmittel in Verbindung mit einer Führung (23), mit welcher die Formkokillen (20, 20') nacheinander in Eingriff einfahren, Zahnradgetriebe (45, 45') zum Eingriff mit den Zahnstangen (38, 38') der Formkokillen, und geregelte Dreheinrichtungen aufweisen, welche in Drehung mit den Zahnradgetrieben gekuppelt sind, dadurch gekennzeichnet, daß die Führung (23) fest angeordnet ist.

5. Vorrichtung nach Anspruch 4, wobei die feste Führung (23) wenigstens eine Schiene (28) aufweist, dadurch gekennzeichnet, daß die Formkokillen (20, 20') in Längsrichtung einen Einschnitt aufweisen zum Eingriff mit der Schiene, wobei eventuell Rollen (42, 43) eingeschaltet sein können.

6. Vorrichtung nach einem der Ansprüche 4 oder 5, wobei die verwendeten Zahnradgetriebe einen Zahnradgetriebemotor (45, 45') am Eingang der festen Führung (23) aufweisen, dadurch gekennzeichnet, daß die Zahnradgetriebe auch eine Zahnradgetriebebremse (46, 46') am Ausgang der festen Führung aufweisen.

7. Vorrichtung nach einem der Ansprüche 1 bis 6, wobei wenigstens auf einem Längsabschnitt der Ausziehdorn (53) gekühlt ist, und wobei der Ausziehdorn dazu Kanäle (57, 58) aufweist für eine innere Zirkulation eines Kühlmittels, dadurch gekennzeichnet, daß wenigstens ein Teilstück des Ausziehdorns wenigstens lokal porös ist, zum Durchgang des Kühlmittels und daß die Innenfläche des Teilstücks in Verbindung ist mit den Kanälen (57, 58) für die Zirkulation des Kühlmittels.

8. Vorrichtung nach einem der Ansprüche 1 bis 6, wobei der Ausziehdorn (53) wenigstens über einen Abschnitt seiner Länge gekühlt ist und wobei der Ausziehdorn dazu Kanäle (57, 58) aufweist für die innere Zirkulation eines Kühlmittels, dadurch gekennzeichnet, daß nur der Endabschnitt des Ausziehdorns (53) gekühlt ist.

9. Vorrichtung nach einem der Ansprüche 1 bis 8, dadurch gekennzeichnet, daß der Ausziehdorn (53) außen im wesentlichen kegelstumpfförmig ausgebildet ist und daß sein Außendurchmesser wenigstens auf einem Abschnitt seiner Länge zwischen der Dornstange und seinem freien Ende spitz zuläuft.

10. Vorrichtung nach einem der Ansprüche 1 bis 9, dadurch gekennzeichnet, daß der Krümmungsradius des Querschnitts einer Rippe einer Formkokille (20, 20') größer ist als der Krümmungsradius des Querschnitts einer Hohlkehle und daß das Verhältnis der Radien zwischen 1,1 und 1,8 und vorzugsweise zwischen 1,25 und 1,35 beträgt.

11. Rohrförmiges Profil mit einer glatten Innenfläche und mit einer abwechselnd mit ringförmigen Rippen und Hohlkehlen ausgebildeten Außenfläche, dadurch gekennzeichnet, daß es beispielsweise mit Hilfe einer Vorrichtung nach einem der Ansprüche 1 bis 9 hergestellt ist, daß seine Rippen einen kreisförmigen Querschnitt aufweisen, daß die Hohlkehlen, mit welchen sich die Rippen abwechseln, ebenfalls einen ringförmigen Querschnitt aufweisen und daß der Krümmungsradius des Querschnitts der Rippen kleiner ist als der Krümmungsradius des Querschnitts der Kehlen.

12. Rohrförmiges Profil nach Anspruch 11, dadurch gekennzeichnet, daß der Krümmungsradius (R2) des Querschnitts der Hohlkehlen größer ist als der Krümmungsradius (R1) des Querschnitts der Rippen, und daß das Verhältnis der Radien zwischen 1,1 und 1,8 und vorzugsweise zwischen 1,25 und 1,35 liegt.

13. Rohrförmiges Profil mit einer glatten Innenfläche und mit einer abwechselnd mit Rippen und Kehlen versehenen Außenfläche, dadurch gekennzeichnet, daß die Rippen eine kreisförmige Querschnittsfläche aufweisen, daß die mit den Rippen sich abwechselnden Kehlen ebenfalls eine kreisförmige Querschnittsfläche aufweisen, und daß der Krümmungsradius der Querschnittsfläche der Rippen kleiner ist als der Krümmungsradius der Querschnittsfläche der Kehlen.

14. Rohrförmiges Profil nach Anspruch 13, dadurch gekennzeichnet, daß der Krümmungsradius der Querschnittsfläche seiner Kehlen größer ist als der Krümmungsradius der Querschnittsfläche seiner Rippen und daß das Verhältnis der Krümmungsradien zwischen 1,1 und 1,8 und vorzugsweise zwischen 1,25 und 1,35 liegt.

FIG.1

0 005 104

FIG. 2

FIG.3

FIG.4

FIG.6

FIG.5